# EUROPÄISCHE PATENTSCHRIFT

(11) **EP 2 108 603 B1**
(45) Veröffentlichungstag und Bekanntmachung des Hinweises auf die Patenterteilung: **04.01.2017**
(21) Anmeldenummer: 09004883.6
(22) Anmeldetag: 02.04.2009
(51) Int. Cl.: B65G 47/14, B23P 19/00, B65G 47/256

(54) **Versorgungseinheit**
Supply unit
Unité d'alimentation

(30) Priorität: 08.04.2008 DE 202008004870 U; 09.07.2008 DE 202008009174 U
(43) Veröffentlichungstag der Anmeldung: 14.10.2009
(73) Patentinhaber: Schmidt, Heiko, 93138 Lappersdorf (DE)
(72) Erfinder: Schmidt, Heiko, 93138 Lappersdorf (DE)
(74) Vertreter: Glück Kritzenberger Patentanwälte PartGmbB

(56) Entgegenhaltungen:
- EP-A- 1 000 700
- FR-A- 597 846
- JP-A- 4 112 119
- US-A- 6 138 868
- US-A1- 2003 042 112
- US-A1- 2006 185 149

## Beschreibung

### Die Erfindung bezieht sich auf eine Versorgungseinheit gemäß Oberbegriff Patentanspruch 1.

Versorgungseinheiten dieser Art sind auch unter der Bezeichnung "Stufenförderer" grundsätzlich bekannt und dienen dazu, Bauelemente, die in einer Aufnahme oder in einem Topf der Versorgungseinheit als ungeordnete Menge eingebracht und dort zur Verfügung stehen, aus dieser Menge mit Hilfe eines auf- und abbewegten Förderelementes an ein Transportelement oberhalb der ungeordneten Menge zu fördern, sodass die Bauelemente dann über das Transportelement einer weiteren Verwendung zugeführt werden können.

Das Förderelement wird mit einer Förder- oder Mitnahmefläche entlang einer Innenfläche der Aufnahme bewegt, sodass sich die mit dem Förderelement mitgeführten Bauelemente sowohl an der Förder- und Mitnahmefläche als auch an der Innenfläche der Aufnahme gleitend abstützen können. Bereits durch die Ausbildung des Förderelementes kann dafür gesorgt werden, dass nur solche Bauelemente, die eine bestimmte Orientierung oder Lage aufweisen, mit dem Förderelement in dem Bereich des Transportelementes, d.h. in den Übergabebereich Förderelement/Transportelement gefördert und an das Transportelement übergeben werden.

Bei bekannten Versorgungseinheiten ist das Transportelement zum Abführen der Bauelemente aus der Versorgungseinheit grundsätzlich als ein als Linearförderer ausgebildeter Vibrationsförderer. Nachteilig hierbei ist u.a. die geringe Fördergeschwindigkeit solcher Vibrationsförderer, sodass relativ lange Taktzeiten benötigt werden, um die mit dem Förderelement aus der ungeordneten Menge an das Transportelement bzw. an einen dortigen Übergabebereich geförderten Bauelemente aus diesem Übergabebereich wegzufördern, wodurch die Leistung einer Versorgungseinheit (Anzahl der mit dem Transportelement wegtransportierten Bauelemente je Zeiteinheit) begrenzt ist.

Eine Versorgungseinheit mit den Merkmalen des Oberbegriffs des Patentanspruches 1 ist grundsätzlich bekannt (US-A-6 138 868). Die bekannte Versorgungseinheit dient zum Vereinzeln und Zuführen von Ampullen aus einer Aufnahme. Die Ampullen werden mit einem schwertartigen Förderelement aus der Aufnahme entlang einer geneigten Innenfläche der Aufnahme auf ein über der Aufnahme angeordnetes Förderelement transportiert und sind dabei auf einer Mitnahme und Förderfläche des schwertartigen Förderelementes mit ihrer Längserstreckung parallel zu der Ebene der Innenfläche orientiert und werden an das Förderelement derart weitergegeben, dass sie dort mit ihrer Längserstreckung in Förderrichtung ausgerichtet sind. Sofern eine vorgegebene Orientierung für die Ampullen auf dem Transportelement angestrebt wird, ist dies wegen ihrer Ausrichtung nur durch relativ aufwendige Maßnahmen erreichbar.

Aufgabe der Erfindung ist es, eine Versorgungseinheit aufzuzeigen, die diesen Nachteil nicht aufweist und mit der es möglich ist, Bauelemente mit hoher Leistung für eine Weiterverwendung zur Verfügung zu stellen. Zur Lösung dieser Aufgabe ist eine Versorgungseinheit entsprechend dem Patentanspruch 1 ausgebildet.

Bei der erfindungsgemäßen Versorgungseinheit werden dies Verbindungselemente ebenfalls mit dem in die ungeordnete Menge mit der Förder- und Mitnahmefläche eintauchenden Förderelement aus dieser Menge angehoben und dabei an die Transportstrecke übergeben. Die Transportstrecke ist mit wenigstens einem umlaufend antreibbaren Förderelement versehen, mit dem die Verbindungselemente mit hoher Geschwindigkeit aus dem mit dem Förderelement zusammenwirkenden Übergabebereich der Förderstrecke abtransportiert werden, sodass bei mit entsprechend hoher Geschwindigkeit auf- und abbewegtem Förderelement eine hohe Leistung für die Versorgungseinheit möglich ist. Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
- Fig. 1 - 5: eine Versorgungseinheit zum Zuführen von Muttern an eine Verarbeitungseinrichtung in perspektivischer Darstellung sowie in Vorderansicht, Seitenansicht und Rückansicht sowie Draufsicht;
- Fig. 6: in vereinfachter Darstellung einen Schnitt entsprechend der Linie I - I der Figur 3;
- Fig. 7: den Übergabebereich in Seitenansicht;
- Fig. 8: eine ähnliche Darstellung wie Figur 6, jedoch bei einer Versorgungseinheit für Bolzen, beispielsweise Gewindebolzen.

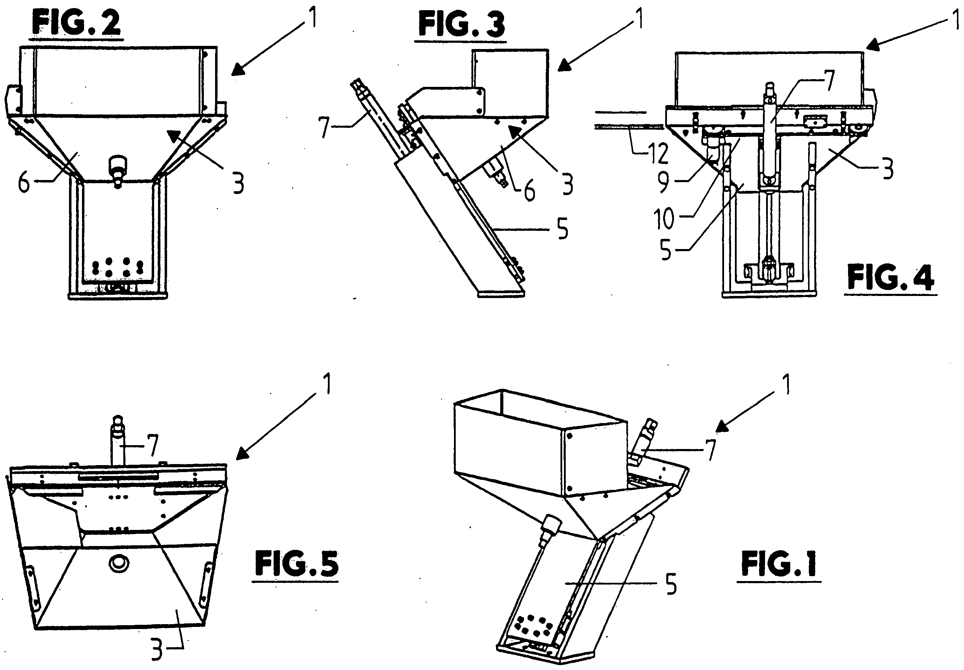

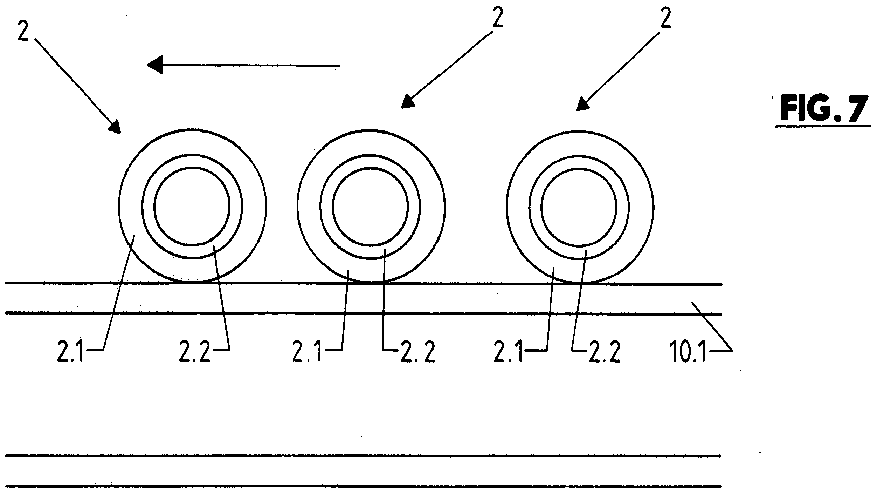

Die in den Figuren 1 - 7 dargestellte Versorgungseinheit 1 dient zum Zuführen von Muttern 2 (z.B. Nietmuttern) an eine nicht näher dargestellte Einrichtung zum Verarbeiten dieser Muttern, beispielsweise an einen nicht näher dargestellten Stanzkopf zum Einbringen der Muttern 2 in aus Metallblech bestehenden Werkstücken. Die Muttern 2 bestehen bei der dargestellten Ausführungsform aus einem kreiszylinderförmigen Körper 2.1, der eine durchgehende Gewindebohrung aufweist und an einer Stirnseite mit einem Nietbund 2.2 versehen ist, der nach dem Fügen in eine Öffnung des jeweiligen Werkstückes zur dortigen Verankerung der Mutter 2 durch Vernieten oder Verpressen verformt wird und einen im Vergleich zum Körper 2.1 reduzierten Durchmesser aufweist.

Die Versorgungseinheit 1 besteht u.a. aus einem sich zur Unterseite trichterartig verengenden Topf 3 mit einem Topfinnenraum 4 zur Aufnahme einer ungeordneten Menge bestehend aus einer Vielzahl von Muttern 2 sowie aus einem schwertartigen Förderelement 5, welches mit einer oberen Teillänge bzw. mit einem dortigen Abschnitt 5.1 durch eine Öffnung des Topfbodens 6 in den Topfinnenraum 4 hineinreicht und durch einen außerhalb des Topfes 3 an der Rückseite der Versorgungseinheit 1 vorgesehenen Antrieb in Form eines Pneumatik-Zylinders getaktet auf- und abbewegbar ist, wie dies in den Figuren mit dem Doppelpfeil A angegeben ist. Der Abschnitt 5.1 wird dabei entlang der Innenfläche einer gegenüber der Vertikalen geneigten Rückwand 8 bzw. eines Wandabschnittes 8.1 dieser Rückwand 8 des Topfes 4 bewegt, und zwar derart, dass er bei jeder Bewegung nach unten mit einer senkrecht oder im Wesentlichen senkrecht zur Innenfläche des Wandabschnittes 8.1 orientierten und sich in horizontaler Richtung erstreckenden Förderfläche 5.2 bei jedem Abwärtsbewegen des Förderelementes 5 in die im Topf 3 aufgenommenen Muttern 2 eintaucht und bei jedem Aufwärtsbewegen eine der Breite des schwertartigen Förderelementes 5 bzw. der Breite der Förderfläche 5.2 entsprechende Anzahl von Muttern 2 nach oben mitführt. Die mit dem Förderelement 5 nach oben mitgeführten Muttern 2 sind dabei teilweise zufällig so orientiert, dass sie mit ihrer dem Nietbund 22 abgewandten Stirnfläche 2.3 gegen die Innenfläche der Rückwand 8 anliegen, was einer "richtigen" Orientierung entspricht, oder aber so angeordnet, dass sie mit ihrem Nietbund 2.2 gegen die Innenfläche der Rückwand 2 anliegen. Auf jeden Fall sind die mit dem Förderelement 5 mitgeführten Muttern 2 mit ihrer Achse jeweils senkrecht oder im Wesentlichen senkrecht zur Innenfläche der Rückwand 8 orientiert. Alle Muttern 2, die zufällig anders orientiert sind, werden von dem Förderelement 5 nicht mitbewegt oder fallen nach dem Auftauchen der Fläche 5.2 aus dem im Topf 3 aufgenommenen Muttervorrat von der Fläche 5.2 ab.

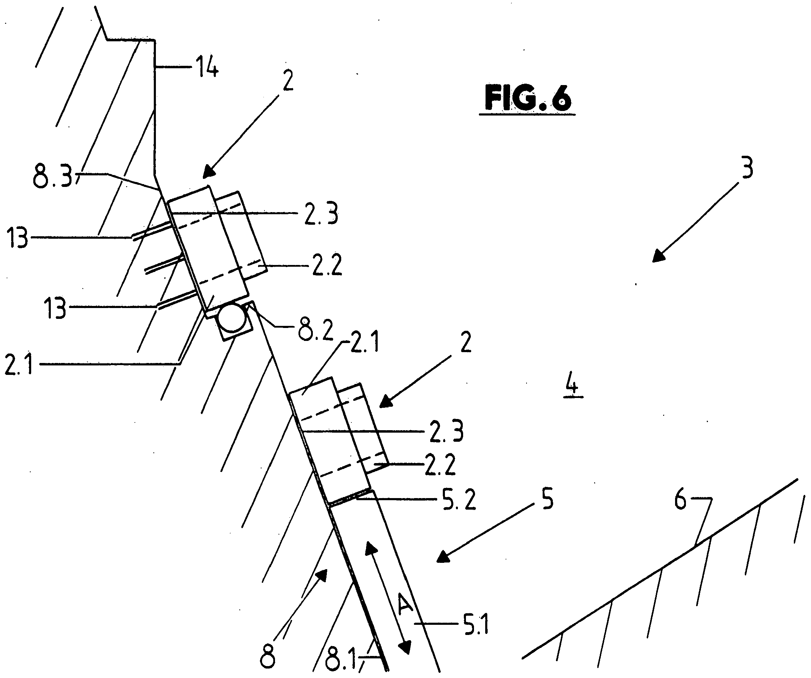

Die mit dem Förderelement 5 mitgeführten Muttern gelangen schließlich auf eine an der Rückwand 8 gebildete Stufe 8.2, die sich ebenso wie die Fläche 5.2 zwar in horizontaler Richtung, d.h. senkrecht zur Zeichenebene der Figur 6 erstreckt, in Querrichtung allerdings gegenüber der Horizontalen leicht geneigt ist, sodass mit dem Förderelement 5 mitgeführten Muttern 2 aufgrund ihrer Schwerkraft von der Föerderfläche 5.2 seitlich auf die Stufe 8.2 rutschen und dann entweder mit der Stirnseite 2.3 oder mit ihrem Nietbund 2.2 gegen die plane Innenfläche der sich an die Stufe 8.2 anschließenden Fortsetzung 8.3 der Rückwand 8 anliegen. Um eine sichere Übergabe der Muttern 2 von der Fläche 5.2 des Förderelementes 5 auf die Stufe 8.2 zu gewährleisten, ist der Hub des Förderelementes 5 so eingestellt, dass in der obersten Stellung dieser Hubbewegung die Fläche 5.2 sich etwas oberhalb der Stufe 8.2 befindet. An der Stufe 8.2 ist ein Förderelement vorgesehen, mit dem die an die Stufe 8.2 bzw. an den dortigen Übergabebereich übergebenen Muttern 2 beschleunigt zur Seite, d.h. in horizontaler Richtung aus dem Übergabebereich wegbewegt werden, an den die Muttern 2 mit dem Förderelement 5 gefördert wurden.

Das Transportelement, welches zusammen mit der Stufe 8.2 und dem Abschnitt 8.3 eine innere Transportstrecke bildet, ist bei der dargestellten Ausführungsform von einem mit einem Motor 9 umlaufend angetriebenen Förderriemen 10 gebildet, dessen obere Länge 10.1 sich im Bereich der Stufe 8.2 befindet und eine dortige Auflage für die an die Stufe 8.2 geförderten Muttern 2 bildet. Der Förderriemen 10 ist kontinuierlich angetrieben, und zwar mit einer solchen Geschwindigkeit, dass auf jeden Fall immer dann, wenn die Fläche 5.2 des Förderelementes 5 die obere Hubposition erreicht, sich an dem dem Förderelement 5 zugeordneten Teil der Stufe 8.2 keine Muttern 2 mehr befinden.

Die mit dem Förderriemen 10 bzw. mit der Länge 10.1 in horizontaler Richtung aus dem Bereich des Förderelementes 5 weggeförderten Muttern 2 gelangen in eine an die Stufe 8.2 anschließende äußere Führung 12, über die die Muttern 2 dann einer weiteren Verwendung zugeführt werden.

Um sicherzustellen, dass nur richtig orientierte Muttern 2, d.h. solche Muttern, die mit ihrer Stirnfläche 2.3 der Rückwand 8 bzw. dem Abschnitt 8.3 dieser Rückwand benachbart liegen, in die Führung 12 gelangen, sind Maßnahmen vorgesehen, die dafür sorgen, dass falsch orientierte Muttern 2 zurück in den Topf 3 fallen. Bei der dargestellten Ausführungsform sind hierfür im Bereich der von der Stufe 8.2 und der oberen Förderriemenlänge 10.1 gebildeten internen Förderstrecke an der Innenfläche des Abschnittes 8.3 Düsenöffnungen 13 für den Austritt von Luft vorgesehen. Der aus den Öffnungen 13 austretende Luftstrom ist so eingestellt, dass durch ihn richtig orientierte Muttern 2, die mit ihrer Stirnfläche 2.3 an der Innenfläche des Abschnittes 8.3 anliegen, dort gehalten werden, während falsch orientierte Muttern 2, die mit ihrem Nietbund 2.2 gegen die Innenfläche des Abschnittes 8.3 anliegen, durch den Luftstrom weggeblasen werden und damit in den Topf 3 bzw. in die dortige ungeordnete Menge an Muttern 2 zurückfallen.

Oberhalb der von der Stufe 8.2 und der anschließenden Innenfläche des Abschnittes 8.3 gebildeten inneren Führung ist ein Abweiser 14 vorgesehen, der dafür sorgt, dass solche Muttern 2, die sich zufällig oberhalb von auf der Stufe 8.2 aufliegenden Muttern 2 befinden, abgeworfen werden und damit ebenffalls in den Topf 3 zurückgelangen.

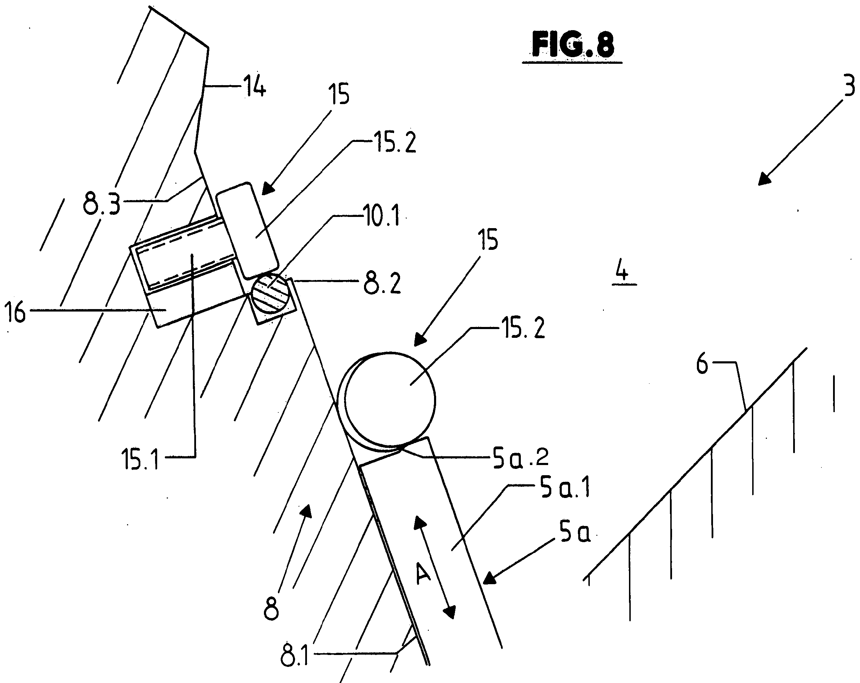

Die Figur 8 zeigt in einer Darstellung ähnlich Figur 6 eine Versorgungseinheit 1 a, die zum Zuführen von Bolzen 15 an eine Verarbeitungseinheit dient. Die Bolzen 15 bestehen jeweils aus einem beispielsweise mit einem Außengewinde versehenen Bolzenschaft 15.1 und einen Bolzenkopf 15.2. Die Versorgungseinheit 1 a unterscheidet sich von der Versorgungseinheit 1 im Wesentlichen nur dadurch, dass das dem Förderelement 5 entsprechende platten- oder schwertartige Förderelemente 5a zumindest an der Fläche 5a.2 in der Achsrichtung senkrecht zum Wandabschnitt 8.1 der Rückwand 8 eine etwas größere Breite aufweist, sodass Bolzen 15 dort Platz finden, und zwar mit ihrer Bolzenachse parallel oder schräg zur Innenfläche des Wandabschnittes 8.1 orientiert und mit dem Bolzenkopf 15.2 sowie mit dem freien Ende des Bolzenschaftes 15.1 auf der Fläche 5a.2 aufliegend. Mit dem Förderelement 5a werden jeweils mehrere Bolzen 15 aus der in dem Topfinnenraum 4 aufgenommenen Bolzenmenge zuverlässig nach oben an die Stufe 8.2 gefördert, wobei die Bolzen jeweils mit ihrem Bolzenkopf 15.2 und mit dem freien Ende ihres Bolzenschaftes 15.1 in dem zwischen der Schrägfläche 8.1 und der Fläche 5a.2 gebildeten Winkel gehalten sind. Die Breite der Fläche 5a.2 ist dabei kleiner als der Durchmesser des Bolzenkopfes 15.2, aber größer als der halbe Durchmessers des Bolzenkopfes 15.2. Der an die Stufe 8.2 anschließende Wandabschnitt 8.3 ist bei dieser Ausführung mit einer Freisparung 16 für den Schaft 15.1 der Bolzen 15 versehen, sodass ein Großteil der nach oben geförderten Bolzen 15 aufgrund der Schrägstellung des Wandabschnitts 8.1 durch Schwerkraft mit dem Bolzenschaft 15.1 in der Freisparung 16 hinein schwenken. Hierfür ist der Antrieb für das Auf- und Abbewegen (Doppelpfeil A) des Förderelementes 5 so ausgebildet, dass in der oberen Hubstellung dieses Förderelementes die Fläche 5a.2 zumindest niveaugleich, bevorzugt aber geringfügig über der unteren Fläche der Freisparung 16 liegt. Spätestens beim Zurückbewegen des Förderelementes 5a aus der oberen Hubstellung liegen die Bolzen 15, die mit ihrem Bolzenschaft 15.1 in die Freisparung 16 hinein reichen und senkrecht oder im Wesentlichen senkrecht zum Wandabschnitt 8.3 orientiert sind, mit ihrem Bolzenkopf 15.2 auf der Förderriemenlänge 10.1 auf und werden dadurch beschleunigt aus dem mit dem Förderelement 5a zusammenwirkenden Bereich der Stufe 8.2 bzw. aus dem Übergabebereich abtransportiert.

Die Stufe 8.2 und der Wandabschnitt 8.3 mit der Freisparung 16 und das Transportband 10 bilden wiederum ein inneres Transportsystem. Es versteht sich, dass die anschließende äußere Führung zur Weiterleitung der Bolzen 15 an die Verarbeitungseinheit zumindest in einem Teilbereich ebenfalls die Freisparung 16 für die Bolzenschäfte 15.1 aufweist.

Die Erfindung wurde voranstehend an Ausführungsbeispielen beschrieben. Es versteht sich, dass Änderungen sowie Abwandlungen möglich sind.

### Bezugszeichenliste

- 1, 1a: Versorgungseinheit
- 2: Mutter
- 2.1: Mutterkörper
- 2.2: Nietbund
- 2.3: Stirnfläche
- 3: Topf
- 4: Topfinnenraum
- 5, 5a: Förderelement
- 5.1, 5a.1: in den Topfinnenraum hineinreichender Abschnitt des Förderelementes
- 5.2, 5a.2: Förderfläche des Förderelementes 5 bzw. 5a
- 6: Topfboden
- 7: Antrieb
- 8: Rückwand
- 8.1, 8.3: Rückwandabschnitt
- 8.2: Stufe
- 9: Motor
- 10: Förderriemen
- 10.1: obere Länge des Förderriemens

- 12: äußere Führung
- 13: Luftaustrittsöffnungen
- 14: Abweiser
- 15: Bolzen
- 15.1: Bolzenschaft
- 15.2: Bolzenkopf
- 16: Freisparung

- A: Bewegung des Förderelementes 5 bzw. 5a
- B: horizontale Förderbewegung des Förderriemens 10

## Patentansprüche

1. Versorgungseinheit zum lagerichtigen Zuführen von Verbindungselementen (2, 15), wie Nietmuttern oder Nietbolzen aus einer ungeordneten Menge in einer Aufnahme (3) an eine Verwendungseinheit, mit einer Aufnahme (3) und einem schwertartigen Förderelement (5, 5a) mit einem Antrieb (7) zum Bewegen zumindest eines eine Förderfläche (5.2, 5a.2) aufweisenden Abschnitts (5.1, 5a.1) des Förderelementes (5, 5a) in einer hin- und hergehenden Hubbewegung (A) entlang einer Innenfläche (8.1) einer Rückwand (8) der Aufnahme (3) zum Eintauchen in einen von den Verbindungselementen (2, 15) eingenommenen Bereich (4) der Aufnahme (3) und zum Mitführen von Verbindungselementen (2, 15) an eine oberhalb dieses Bereichs (4) vorgesehene Transportstrecke zum Abtransportieren der mit dem Förderelement (5, 5a) an die Transportstrecke geförderten Verbindungselemente (2, 15), wobei die Transportstrecke wenigstens ein in einer Transportrichtung bewegbares, endlos umlaufend antreibbares Transportelement (10, 10.1) aufweist, welches eine Stand-oder Abstützfläche für die Verbindungselemente (2, 15) bildet,
**dadurch gekennzeichnet, dass** die Transportstrecke an einer an der Innenfläche (8.1) der Rückwand (8) gebildeten Stufe (8.2) vorgesehen ist, an die sich eine Fortsetzung (8.3) der Rückwand (8) anschließt, und dass das Transportelement (10, 10.1) zusammen mit der Stufe (8.2) und der Fortsetzung (8.3) eine innere Transportstrecke bildet, wobei die Stufe (8.2) sowie die Förderfläche (5.2. 5a.2) des Förderelementes (5, 5a) in Querrichtung gegenüber der Horizontalen leicht geneigt sind, sodass mit dem Förderelement (5, 5a) mitgeführte Verbindungselemente (2, 15) aufgrund ihrer Schwerkraft von der Förderfläche (5.2, 5a.2) seitlich auf die Stufe (8.2) rutschen und gegen eine Innenfläche der Fortsetzung (8.3) der Rückwand (8) anliegen.

2. Versorgungseinheit nach Anspruch 1, **dadurch gekennzeichnet, dass** die Innenfläche (8.1) der Aufnahme (3) geneigt ist.

3. Versorgungseinheit nach einem der vorhergehenden Ansprüche, **dadurch gekennzeichnet, dass** die Förderfläche (5.2, 5a.2) zur gleichzeitigen Aufnahme mehrere Verbindungselemente (2, 15) ausgebildet ist.

4. Versorgungseinheit nach Anspruch 1 oder 3, **dadurch gekennzeichnet, dass** das Förderelement (5, 5a) durch den Förderelementantrieb (7) in vertikaler oder im Wesentlichen in vertikaler Richtung auf- und abbewegbar ist.

5. Versorgungseinheit nach einem der vorhergehenden Ansprüche, **dadurch gekennzeichnet, dass** die Förderfläche (5.2, 5a.2) in der oberen Hubstellung des Förderelementes (5, 5a) niveaugleich oder in etwa niveaugleich mit der Förderstrecke angeordnet ist.

6. Versorgungseinheit nach einem der vorhergehenden Ansprüche, **gekennzeichnet durch** Mittel (13) an der Transportstrecke zum Entfernen von solchen Verbindungselementen (2, 15), die nicht eine vorgegebene Orientierung aufweisen.

7. Versorgungseinheit nach einem der vorhergehenden Ansprüche, **dadurch gekennzeichnet, dass** für Verbindungselemente in Form von Bolzen die Förderfläche (5.2, 5a.2) eine Breite aufweist, die gleich oder kleiner ist als der Durchmesser der Bolzenköpfe (15.2).

## Claims

1. A supply unit for supplying connecting elements (2, 15), such as riveting nuts or riveting bolts, in the correct position from an unordered heap in a receptacle (3) to a use unit, said supply unit having a receptacle (3) and a sword-like conveying element (5, 5a) having a drive (7) for moving at least one section (5.1, 5a.1) of the conveying element (5, 5a), which comprises a conveying surface (5.2, 5a.2), in a stroke movement (A) going back and forth along an inner face (8.1) of a rear wall (8) of the receptacle (3) in order to dip into a region (4) of the receptacle (3) occupied by the connecting elements (2, 15) and to carry connecting elements (2, 15) to a transport section provided above said region (4) for transporting away the connecting elements (2, 15) conveyed with the conveying element (5, 5a) to the transport section, wherein the transport section comprises at least one transport element (10, 10.1), which can be moved in a transport direction and can be driven in an endlessly circulating manner and which forms a rest or support face for the connecting elements (2, 15),
**characterised in that**
the transport section is provided on a step (8.2), which is formed on the inner face (8.1) of the rear wall (8) and to which an extension (8.3) of the rear wall (8) adjoins, and **in that** the transport element (10, 10.1) together with the step (8.2) and the extension (8.3) forms an inner transport section, wherein the step (8.2) and the conveying surface (5.2, 5a.2) of the conveying element (5, 5a) are slightly inclined in relation to the horizontal in the transverse direction, so that connecting elements (2, 15) carried with the conveying element (5, 5a) slide under the effect of gravity from the conveying surface (5.2, 5a.2) laterally onto the step (8.2) and rest against an inner face of the extension (8.3) of the rear wall (8).

2. The supply unit according to claim 1, **characterised in that** the inner face (8.1) of the receptacle (3) is inclined.

3. The supply unit according to any one of the preceding claims, **characterised in that** the conveying surface (5.2, 5a.2) is configured to receive a plurality of connecting elements (2, 15) simultaneously.

4. The supply unit according to claim 1 or 3, **characterised in that** the conveying element (5, 5a) can be moved up and down in the vertical or substantially vertical direction by the conveying element drive (7).

5. The supply unit according to any one of the preceding claims, **characterised in that** the conveying surface (5.2, 5a.2) is arranged at the same level or approximately the same level as the conveying section when the conveying element (5, 5a) is in the upper stroke position.

6. The supply unit according to any one of the preceding claims, **characterised by** means (13) on the transporting section for removing connecting elements (2, 15) that do not have a predefined orientation.

7. The supply unit according to any one of the preceding claims, **characterised in that** for connecting elements in the form of bolts, the conveying surface (5.2, 5a.2) has a width that is less than or equal to the diameter of the bolt heads (15.2).

## Revendications

1. Unité d'alimentation pour l'acheminement en position correcte d'éléments de raccordement (2, 15) comme des écrous rivetés ou des boulons rivetés depuis une quantité non ordonnée dans un support (3) vers une unité d'utilisation, comportant un support (3) et un élément convoyeur en forme d'épée (5, 5a) avec une commande (7) pour déplacer au moins une section (5.1, 5a.1) de l'élément convoyeur (5, 5a) présentant une surface de convoyage (5.2, 5a.2) dans un mouvement de levage en va-et-vient (A) le long d'une surface interne (8.1) d'une paroi arrière (8) du support (3) pour la plonger dans une zone (4) circonscrite par les éléments de raccordement (2, 15) du support (3) et pour entraîner des éléments de raccordement (2, 15) vers un segment de transport prévu au-dessus de cette zone (4) pour l'évacuation des éléments de raccordement (2, 15) convoyés par l'élément convoyeur (5, 5a) vers le segment de transport, le segment de transport présentant au moins un élément de transport (10, 10.1) mobile dans un sens de transport et pouvant être entraîné en révolution continue et qui constitue une surface d'appui ou de soutien pour les éléments de raccordement (2, 15),
**caractérisée en ce que** le segment de transport est prévu à un niveau (8.2) formé sur la surface interne (8.1) de la paroi arrière (8), auquel se raccorde un prolongement (8.3) de la paroi arrière (8) et **en ce que** l'élément de transport (10, 10.1) constitue avec le niveau (8.2) et le prolongement (8.3) une distance de transport interne, le niveau (8.2) et la surface de convoyage (5.2, 5a.2) de l'élément convoyeur (5, 5a) étant légèrement inclinés par rapport à l'horizontale dans le sens transversal, de sorte que les éléments de raccordement (2, 15) entraînés avec l'élément convoyeur (5, 5a), en raison de leur gravité, glissent de la surface de convoyage (5.2, 5a.2) latéralement sur le niveau (8.2) et reposent contre une surface interne du prolongement (8.3) de la paroi arrière (8).

2. Unité d'alimentation selon la revendication 1, **caractérisée en ce que** la surface interne (8.1) du support (3) est inclinée.

3. Unité d'alimentation selon une des revendications précédentes, **caractérisée en ce que** la surface de convoyage (5.2, 5a.2) est conçue pour recevoir simultanément plusieurs éléments de raccordement (2, 15).

4. Unité d'alimentation selon la revendication 1 ou 3, **caractérisée en ce que** l'élément convoyeur (5, 5a) peut être déplacé en va-et-vient par la commande d'élément convoyeur (7) dans le sens vertical ou sensiblement dans le sens vertical.

5. Unité d'alimentation selon une des revendications précédentes, **caractérisée en ce que** la surface de convoyage (5.2, 5a.2), dans la position de levage supérieure de l'élément convoyeur (5, 5a), est disposée au même niveau ou sensiblement au même niveau que le segment de convoyage.

6. Unité d'alimentation selon une des revendications précédentes, **caractérisée par** des moyens (13) disposés par le segment de transport et permettant d'éliminer les moyens de raccordement (2, 15) qui ne présentent pas une orientation prédéfinie.

7. Unité d'alimentation selon une des revendications précédentes, **caractérisée en ce que**, pour des éléments de raccordement se présentant sous forme de boulons, la surface de convoyage (5.2, 5a.2) présente une largeur qui est inférieure ou égale au diamètre des têtes de boulons (15.2).
